(19) Europäisches Patentamt
European Patent Office
Office européen des brevets

(11) **EP 4 333 099 A1**

(12) **EUROPEAN PATENT APPLICATION**
published in accordance with Art. 153(4) EPC

(43) Date of publication:
**06.03.2024 Bulletin 2024/10**

(21) Application number: **22866728.3**

(22) Date of filing: **08.09.2022**

(51) International Patent Classification (IPC):
**H01M 4/13** $^{(2010.01)}$

(52) Cooperative Patent Classification (CPC):
**Y02E 60/10**

(86) International application number:
**PCT/CN2022/117924**

(87) International publication number:
**WO 2023/036267 (16.03.2023 Gazette 2023/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.09.2021 CN 202111053876**

(71) Applicant: **Zhuhai CosMX Battery Co., Ltd.
Zhuhai, Guangdong 519180 (CN)**

(72) Inventors:
• **XU, Tengfei
Zhuhai, Guangdong 519180 (CN)**
• **PENG, Ning
Zhuhai, Guangdong 519180 (CN)**

(74) Representative: **Gill Jennings & Every LLP
The Broadgate Tower
20 Primrose Street
London EC2A 2ES (GB)**

(54) **BATTERY ELECTRODE PLATE, BATTERY, AND METHOD FOR MANUFACTURING BATTERY ELECTRODE PLATE**

(57) The present disclosure provides a battery electrode sheet, a battery and a method for manufacturing the battery electrode sheet. The battery electrode sheet includes an electrode sheet body and a tab, the electrode sheet body is provided with a tab installation groove and a first groove, the tab installation groove being communicated with a first edge of the electrode sheet body, and the first groove being connected to a second edge of the electrode sheet body. The first edge and the second edge are two opposite edges of the electrode sheet body, and the tab is connected in the tab installation groove. The battery electrode sheet of the present disclosure is less prone to fracture and the battery is more reliable.

FIG. 6

EP 4 333 099 A1

## Description

### CROSS-REFERENCE TO RELATED APPLICATION

This application claims priority to Chinese Patent Application No. 202111053876.9, entitled "BATTERY ELECTRODE SHEET, BATTERY AND METHOD FOR MANUFACTURING BATTERY ELECTRODE SHEET", and filed with the China National Intellectual Property Administration (CNIPA) on September 9, 2021, which is hereby incorporated by reference in its entirety.

### TECHNICAL FIELD

The present disclosure relates to the technical field of battery, and in particular to a battery electrode sheet, a battery and a method for manufacturing the battery electrode sheet.

### BACKGROUND

With the development of science and technology, lithium-ion battery technology has been rapidly developed. At the same time, users also put forward higher requirements for the rapid charging capability of lithium-ion battery, fast-charging lithium-ion battery has become a trend in the development of consumer lithium-ion battery.

In order to enhance the fast charging performance of battery, the structure of placing tab in the middle of electrode sheet in lithium-ion battery has been more commonly used. That is, the tab is moved to positions such as 3/4, 1/3 and 1/2 of the positive and negative electrode sheets so as to reduce the internal resistance of the battery cell, optimize the distribution of the current density on the electrode sheets in the charging and discharging process, and improve the fast charging capability of the battery. During application of the structure of placing tab in the middle of electrode sheet, in order to improve the production efficiency and reduce the safety risk problem of battery, the wide cleaning technology is generally used. That is, the tab welding groove is first machined on a whole piece of electrode sheet substrate, with blank current collectors, on both the front and back sides of the tab welding groove; and then, the electrode sheet substrate is slit into multiple battery electrode sheets along the width-direction edge of the tab welding groove. In the process described above, it is easy for the slitting not to be carried out along the width-direction edge of the tab welding groove due to problems such as slitting fluctuation or the accuracy of the slitting equipment, so that there will be a coating area between the edge of the electrode sheet and the edge of the tab welding groove. In order to prevent any effect on the flatness of the battery electrode sheet, a punching process will be carried out thereafter to punch off this coating area.

In the battery electrode sheet formed by the above process, a through slot formed by punching is formed between the tab welding groove and the edge of the electrode sheet. The through slot has a notched structure on its side close to the edge of the battery, and its side close to the tab welding groove is directly connected to the tab welding groove. The thickness at the position of tab welding groove is relatively thin and only as thick as the current collector, and such position is subjected to high welding temperature when the tab is installed. Therefore, the side of the through slot close to the tab welding groove is prone to fracture of the electrode sheet due to stress concentration, thereby affecting the reliability of battery.

### SUMMARY

In view of the above problems, the embodiments of the present application provide a battery electrode sheet, a battery and a method for manufacturing a battery electrode sheet and the battery electrode sheet is more reliable and less prone to fracture.

To achieve the above objects, a first aspect of the present application provides a battery electrode sheet including an electrode sheet body and a tab. The electrode sheet body is provided with a tab installation groove and a first groove, the tab installation groove is communicated with a first edge of the electrode sheet body, the first groove is communicated with a second edge of the electrode sheet body, the first edge and the second edge being two opposite edges of the electrode sheet body, and the tab is connected to the tab installation groove.

In one possible embodiment, a projection of the first groove on the first edge along a direction from the second edge to the first edge covers at least a portion of a projection of the tab installation groove on the first edge.

In one possible embodiment, the first groove has a notch located at the second edge, and a length of the notch of the first groove is greater than a width of the tab in a direction parallel to the first edge; and/or the tab installation groove has an opening located at the first edge, the first groove has a notch located at the second edge, and a length of the opening is less than or equal to a length of the notch along a direction parallel to the first edge.

In one possible embodiment, the electrode sheet body includes a current collector and an active material layer disposed on at least one surface of the current collector, a region between the tab installation groove and the first groove having the active material layer.

In one possible embodiment, along a direction from the first edge to the second edge, a width of the active material layer between the tab installation groove and the first groove is greater than the sum of a width of the tab installation groove and a width of the first groove.

In one possible embodiment, the tab installation groove has an opening located at the first edge, the current collector is disposed at a bottom of the tab installation groove, and an active material layer is disposed on three peripheral sides of the tab installation groove.

In one possible embodiment, both surfaces of the current collector are each provided with an active material layer, and a second tab installation groove is provided on the active material layer on a surface of a side of the current collector away from the tab installation groove, the second tab installation groove being provided opposite to the tab installation groove. A length of the second tab installation groove is greater than a length of the tab installation groove, and/or, along a width direction of the electrode sheet body, the width of the second tab installation groove is greater than the width of the tab installation groove.

In one possible embodiment, the first groove has a notch located at the second edge, the current collector is disposed at a bottom of the first groove, and a peripheral side of the first groove is provided with an active material layer.

In one possible embodiment, both surfaces of the current collector are each provided with an active material layer, and the second groove is provided in the active material layer on a surface of the current collector away from the first groove, the second groove being provided opposite to the first groove. Along a length direction of the electrode sheet body, a length of the second groove is greater than a length of the first groove, and/or, along a width direction of the electrode sheet body, a width of the second groove is greater than a width of the one groove.

In one possible embodiment, both surfaces of the current collector are each provided with an active material layer, the tab installation groove is provided in the active material layer on one side of the current collector, the tab is welded to the current collector, and a welding spot on a side of the current collector away from the tab is covered by the active material layer.

In one possible embodiment, the first groove is located in the active material layer on a same side as the tab installation groove, and the other side of the current collector opposite to the first groove is provided with the active material layer.

In one possible embodiment, the tab installation groove housing the tab is covered with a first insulation layer; and/or, the first groove is covered with a second insulation layer.

In one possible embodiment, the tab includes a first segment disposed in the tab installation groove and a second segment protruding out of the tab installation groove, the second segment being provided with a tab adhesive, the first insulation layer covering a portion of the tab adhesive.

In one possible embodiment, the second insulation layer extends beyond the second edge by a distance of less than 3 mm.

In one possible embodiment, the second tab installation groove is provided on a surface of the battery electrode sheet away from the tab installation groove and is opposite to the tab installation groove. The second tab installation groove is covered with a fifth insulation layer, and a portion of the first insulation layer beyond the first edge and a portion of the fifth insulation layer beyond the first edge are bonded to each other.

In one possible embodiment, the first groove is a through-groove along a thickness direction of the electrode sheet through the electrode sheet.

In one possible embodiment, the tab installation groove has a dimension L1 along a width direction of the electrode sheet body, the first groove has a dimension L2 along the width direction of the electrode sheet body, the tab installation groove and the first groove both have a dimension D along a length direction of the electrode sheet body, the tab has a dimension W along the length direction of the electrode sheet body, and the electrode sheet substrate has a dimension Z along the length direction of the electrode sheet body, which meets the following conditions:

$$L1 \geqslant L2;$$

$$L1 = (0.1 \text{ to } 0.6) \times Z;$$

L2 is 0.1 mm to 15.0 mm;

$$D = (1.0 \text{ to } 4.0) \times W.$$

A second aspect of the present application provides a battery including a battery cell formed by laminating and winding a first electrode sheet, a separator and a second electrode sheet, the first electrode sheet and the second electrode sheet having opposite polarity, and the first electrode sheet being the battery electrode sheet as described above.

In one possible embodiment, a surface of the active material layer of the second electrode sheet directly opposite to the tab installation groove is covered with a third insulation layer.

In one possible embodiment, a surface of the active material layer of the second electrode sheet directly opposite to the first groove is covered with a fourth insulation layer.

A third aspect of the present application provides a method for manufacturing a battery electrode sheet, including the following steps.

A plurality of grooves is provided on one surface of the electrode sheet substrate and arranged at intervals in a first direction of the electrode sheet substrate.

The electrode sheet substrate is cut into a plurality of electrode sheet bodies along a plurality of cutting lines, and each groove is slit into a tab installation groove and a first groove along the cutting line, where the tab installation groove and the first groove that are slit from the same groove are located on different electrode sheet bodies.

The tab is welded in the tab installation groove of the electrode sheet body to form the battery electrode sheet.

The plurality of cutting lines are disposed on the electrode sheet substrate at intervals along the first direction, the plurality of cutting lines are disposed in one-to-one correspondence with the grooves, and each of the cutting line passes through the corresponding groove.

In one possible embodiment, after welding the tab in the tab installation groove of the electrode sheet body, the method also includes: covering a notch position of the tab installation groove where the tab is installed with the first insulation layer, and covering a notch position of the first groove with the second insulation layer.

In one possible embodiment, after cutting out the electrode sheet body, the method also includes: performing punching on a position of the electrode sheet body where the first groove is formed to form a gap.

The present application provides the battery electrode sheet, the battery and the method for manufacturing the battery electrode sheet. The battery electrode sheet includes the electrode sheet body and the tab. The electrode sheet body is provided with the tab installation groove and the first groove, the tab installation groove is communicated with the first edge of the electrode sheet body, and the first groove is communicated with the second edge of the electrode sheet body. The first edge and the second edge are two opposite edges of the electrode sheet body, and the tab is connected in the tab installation groove. In the above solutions, since the tab installation groove is communicated with the first edge of the electrode sheet body and the first edge is flush with no gaps, the possibility of fracture is reduced, so that the safety and reliability of battery electrode sheet are improved.

The construction of the present disclosure, as well as its other disclosed purposes and beneficial effects, will be made more apparent and understandable by the description of the preferred embodiment in conjunction with the accompanying drawing.

**BRIEF DESCRIPTION OF DRAWINGS**

FIG. 1a is a structural schematic diagram of a cut-out battery electrode sheet when slitting fluctuation occurs in the prior art.

FIG. 1b is a structural schematic diagram of a cut-out battery electrode sheet when slitting fluctuation occurs in the prior art, the tab being not installed.

FIG. 2 is a flowchart of a method for manufacturing a battery electrode sheet provided by an embodiment of the present application.

FIG. 3 is a structural schematic diagram of an electrode sheet substrate in a first state in a method for manufacturing a battery electrode sheet provided by an embodiment of the present application.

FIG. 4 is a structural schematic diagram of an electrode sheet body in an embodiment of the present application.

FIG. 5 is a structural schematic diagram of a battery electrode sheet in a second state in a method for manufacturing a battery electrode sheet provided by an embodiment of the present application.

FIG. 6 is a schematic diagram of one structure of a battery electrode sheet provided by an embodiment of the present application.

FIG. 7 is a schematic diagram of another structure of a battery electrode sheet provided by an embodiment of the present application.

FIG. 8 is a schematic diagram of the backside structure of a battery electrode sheet shown in FIG. 6.

Description of reference numbers:

100, 100', 200- battery electrode sheet; 101- punching slot; 110- electrode sheet substrate; 111- cutting line; 120, 120'- groove; 121- tab installation groove; 122-first groove; 123- second groove; 124- second tab installation groove; 130, 130'-electrode sheet body; 131-first edge; 132- second edge; 133- active material layer; 140, 140'- tab; 141- first segment; 142- second segment; 143- tab adhesive; 151- first insulation layer; 152- second insulation layer; 153- gap; 155- fifth insulation layer.

**DESCRIPTION OF EMBODIMENTS**

In order to make the objects, technical solutions and advantages of the present disclosure clearer, the technical solutions in the embodiments of the present disclosure will be clearly and completely described below in conjunction with the accompanying drawings in the embodiments of the present disclosure. Obviously, the described embodiments are a portion of the embodiments of the present disclosure and not all of the embodiments. Based on the embodiments in this disclosure, all other embodiments obtained by the ordinary skilled in the art without paying creative efforts fall within the scope of protection of this disclosure.

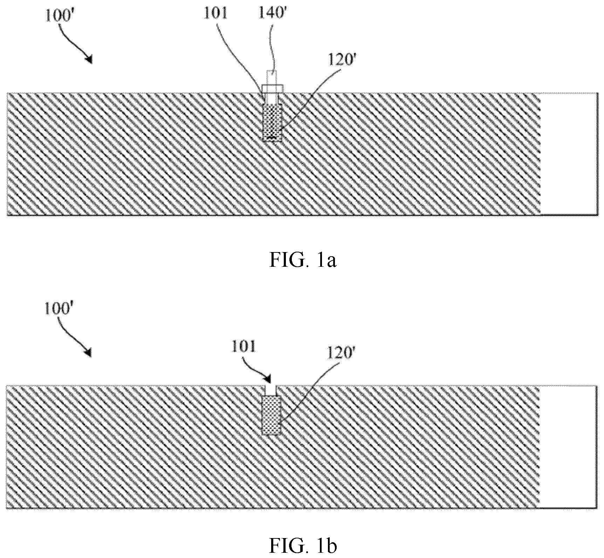

The existing battery has the problem of being prone to fracture of battery electrode sheet and poor reliability of battery. FIGS. 1a and 1b show the situation where a battery electrode sheet 100' is cut out when slitting fluctuation occurs in the prior art, in which the edge portion of the groove 120' for welding the tab 140' has a certain distance from the edge portion of the battery electrode sheet 100', a coating area is formed between the edge portion of the groove 120' and the edge portion of the battery electrode sheet 100', and if the coating area is punched out, a punching slot 101 is formed. The punching slot 101 is a through slot, the punching slot 101 has a notched structure on the side near the edge of the battery, and the side of the punching slot 101 close to the groove 120' is in direct connection with the groove 120'. There is a thinner thickness at the location of the groove 120', and high temperature welding needs to be borne when mounting the tab, so the side of the punching slot 101 near the groove 120' is prone to stress concentration, which leads to fracture of the battery electrode sheet.

Hereinafter, a battery, a battery electrode sheet, and a method for manufacturing a battery electrode sheet of an embodiment of the present application are described in conjunction with the accompanying drawings. It will be noted that in the present application, a first direction F and a second direction S perpendicular to each other are defined in the direction of sheet surface of the sheet-like electrode sheet substrate for purpose of illustration. Where, the first direction F may be, for example, a width direction of the electrode sheet substrate, and the second direction S may be, for example, a length direction of the electrode sheet substrate. A direction perpendicular to the first direction F and the second direction S is defined as a thickness direction of the electrode sheet substrate.

In addition, after the electrode sheet body is made from the electrode sheet substrate, the width direction K of the electrode sheet body is also the first direction F of the electrode sheet substrate, and the length direction L of the electrode sheet body is also the second direction S of the electrode sheet substrate.

The electrode sheet body may include a first edge 131 and a second edge 132 opposite to each other, and the width direction K of the electrode sheet body is toward the second edge 132 along the first edge 131. The length direction L of the electrode sheet body is perpendicular to the width direction K of the electrode sheet body.

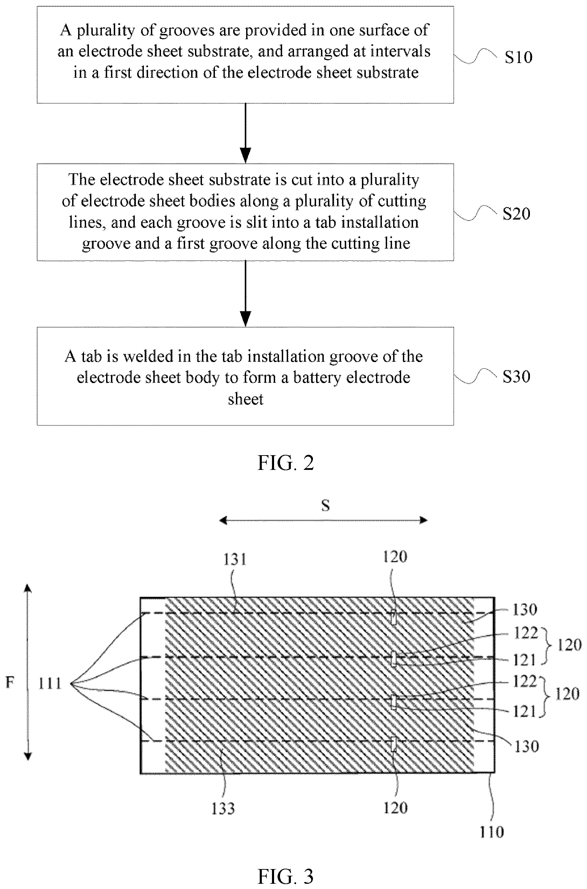

FIG. 2 is a flowchart of a method for manufacturing a battery electrode sheet provided by an embodiment of the present application, and FIG. 3 is a structural schematic diagram of a battery substrate in a first state in a method for manufacturing a battery electrode sheet provided by an embodiment of the present application.

With reference to FIG. 2, the method of making the battery electrode sheet of the present application includes the following steps.

S10, a plurality of grooves are provided on one surface of the electrode sheet substrate, and the plurality of grooves are arranged at intervals in the first direction of the electrode sheet substrate.

S20, the electrode sheet substrate is cut into a plurality of electrode sheet bodies along a plurality of cutting lines, and each groove is slit into a tab installation groove and a first groove along the cutting line, where the tab installation groove and the first groove that are slit from the same groove is located on different electrode sheet bodies.

S30, the tab is welded in the tab installation groove of the electrode sheet body to form the battery electrode sheet.

With reference to FIG. 3, a plurality of cutting lines 111 are spaced apart along the first direction F on an electrode sheet substrate 110, and are disposed in one-to-one correspondence with the grooves 120, and each of the cutting line 111 passes through the corresponding groove 120.

In the above embodiment, the grooves 120 are formed in the electrode sheet substrate 110 and the electrode sheet substrate 110 is cut along the cutting lines 111 passing through the grooves 120. The tab installation groove 121 and the first groove 122 are slit from the groove 120, and the edge of the tab installation groove 121 is necessarily communicated with the side edge of the battery electrode sheet 100, such as the first edge 131. The through slot from punching at the end of the tab installation groove in the prior art may be changed to the tab installation groove structure, and the thickness of the electrode sheet body is increased at this position, thus reducing the possibility of fracture, and improving the safety and reliability of battery electrode sheet.

In addition, in the present application, since the cutting line 111 is located within the range of the groove 120, even if some deviation of the cutting line 111 occurs, the cutting line 111 is less likely to deviate out of the range of the groove 120 compared to the prior art where the cutting line 111 is located at the edge of the tab installation groove 121. That is, the cutting line 111 after deviation will still be located within the groove 120, thereby effectively avoiding the coating area between the edge of the battery electrode sheet 100 and the edge of the tab installation groove 121, ensuring the consistency of the thickness of the installation area of the battery electrode sheet 100, and improving the performance of battery. Meantime, it is also beneficial to the consistency of the interface of battery electrode sheet after formation and reducing the safety risk of battery.

With reference to FIG. 3, the electrode sheet substrate 110 is a base material used to make the battery electrode sheet 100, and its dimension is larger than the dimension of the battery electrode sheet 100 so that at least two battery electrode sheets 100 can be made from one electrode sheet substrate 110 by cutting. The electrode sheet substrate 110 may include a current collector and an active material layer 133 formed on at least one surface of the current collector. For example, in the case that it is intended to form a positive battery electrode sheet, the electrode sheet substrate 110 includes a positive current collector and a positive active material layer formed on at least one surface of the positive current collector; in the case that it is intended to form a negative battery electrode sheet, the electrode sheet substrate 110 includes a negative current collector and a negative active material layer formed on at least one surface of the negative current collector.

Two ends of the electrode sheet substrate 110 along the second direction S may form a winding head-end and a winding tail-end, i.e., after the battery electrode sheet 100 is made from the electrode sheet substrate 110, the two ends of the battery electrode sheet 100 along the second direction S are a winding head-end and a winding tail-end for the battery electrode sheet 100 to wind.

In step S 10, one surface of the electrode sheet substrate 110 is provided with a plurality of grooves 120, which means that the same one surface of the electrode sheet substrate 110 is provided with a plurality of grooves 120. One of the surfaces of the electrode sheet substrate 110 may be provided with the plurality of grooves 120, which may be used for mounting tabs 140. Specifically, the groove 120 may be formed by washing away the active material layer 133 from the surface of the current collector.

Of course, the present application is not limited to providing the plurality of grooves 120 in only one surface of the electrode sheet substrate 110, and a surface of the electrode sheet substrate 110 that is away from the groove 120 may also be provided with a recessed structure.

For example, when ultrasonic welding is used for welding of the tab 140, auxiliary grooves need to be made in the surface of the electrode sheet substrate 110 away from the above grooves 120, and these auxiliary grooves need to correspond one-to-one with the above grooves 120 so as to facilitate smooth ultrasonic welding.

In an embodiment of the present application, plurality of grooves 120 are spaced apart in the first direction F of the electrode sheet substrate 110. For example, the plurality of grooves 120 are spaced apart by the same distance in the first direction F, so that the width of each of the battery electrode sheets 100 may be the same when the battery electrode sheets 100 are made from the electrode sheet substrate 110. In addition, each of the grooves 120 may be arranged in alignment in the first direction F, so that the tab 140 corresponding to the fabricated battery electrode sheet 100 may be installed at the same position of the battery electrode sheet 100.

The dimensions of the groove 120 along the first direction F and along the second direction S may be determined based on the size of the tab 140 that actually needs to be installed.

In step S20, the cutting line 111 of the electrode sheet substrate 110 is first determined, and then the electrode sheet substrate 110 is cut along the cutting line 111.

That is to say, the electrode sheet substrate 110 is cut into a plurality of electrode sheet bodies 130 along a plurality of cutting lines 111, and the plurality of cutting lines 111 may be arranged on the electrode sheet substrate 110 at intervals along the first direction F. The plurality of cutting lines 111 may be parallel to each other. For example, the plurality of cutting lines 111 may be each parallel to the second direction S. In order to cut out the battery electrode sheet 100 with consistent dimension, the spacing between the cutting lines 111 may be identical.

It should be noted that the plurality of cutting lines 111 need to be provided in one-to-one correspondence with the grooves 120, and each cutting line 111 passes through the corresponding groove 120.

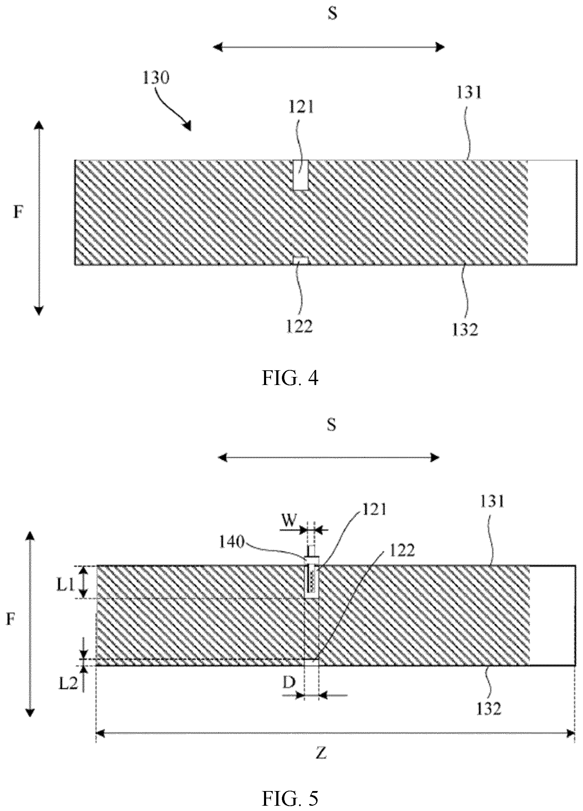

FIG. 4 is a structural schematic diagram of the electrode sheet body in an embodiment of the present application. From FIGS. 3 and 4, since the cutting line 111 passes through the groove 120, each groove 120 may be split into the tab installation groove 121 and the first groove 122. Moreover, in one electrode sheet body 130, the tab installation groove 121 is located at the first edge 131 of the electrode sheet body 130 and the first groove 122 is located at the second edge 132 of the electrode sheet body 130. At this time, the tab installation groove 121 is communicated with an edge of the electrode sheet body 130 along the width direction K, for example, the first edge 131. In this way, when the tab 140 is installed into the tab installation groove 121 from the top side of the electrode sheet body 130, the thickness of the tab 140 within the installation area is relatively consistent, and there will be no partial swelling in the direction of the thickness thereof, thereby improving the flatness of the battery electrode sheet 100 and enhancing the performance of the battery.

In addition, it should be noted that since one cutting line 111 slits one groove 120, the tab installation groove 121 and the first groove 122 slit from the same one groove 120 are located in different electrode sheet bodies 130.

In one electrode sheet substrate 110, along the four cutting lines 111 shown in FIG. 3, 3 strips of electrode sheet bodies 130 as well as stripped electrode sheets at the topmost portion and the bottommost portion are cut out. It is understandable that no tab installation groove 121 is formed on the stripped electrode sheet at the topmost portion and the bottommost portion, and thus the stripped electrode sheet can be discarded. The stripped electrode sheet located on the bottommost side may be used as the battery electrode sheet 100 after welding the tab due to the tab installation groove 121 formed thereon.

In this embodiment of the present application, when the spacing between the cutting lines 111 is equal, each groove 120 has the same dimension along the first direction F, and each cutting line 111 may be located at the same position along the first direction F as the corresponding respective groove 120.

In step S30, on the basis of the electrode sheet body 130 shown in FIG. 4, the tab 140 may be welded in the tab installation groove 121 of the electrode sheet body 130 to form the battery electrode sheet in the second state shown in FIG. 5.

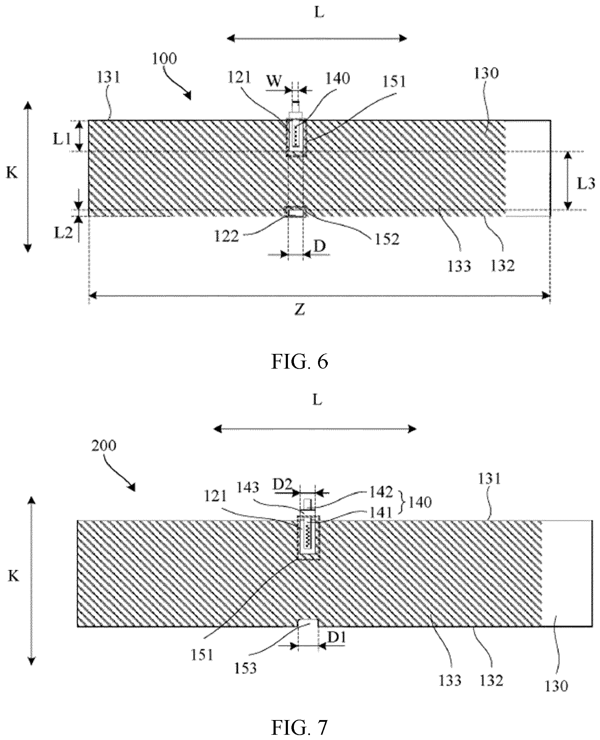

In the embodiment of the present application, it may be understood that, in the electrode sheet body 130, the tab installation groove 121 can be used for installing the tab 140 and the first groove 122 serves as a structure that inevitably occurs during processing. To improve the insulation property, after step S30, the battery electrode sheet 100 shown in FIG. 6 may be formed by covering the first insulation layer 151 at the notch of the tab installation groove 121 where the tab 140 is installed and covering the second insulation layer 152 at the notch of the first groove 122 based on the battery electrode sheet shown in FIG. 5 that is in the second state.

Alternatively, it is also possible to provide the first insulation layer 151 at the notch of the tab installation groove 121, and at the same time cover a side of the electrode sheet body 130 away from the tab installation groove 121 with the first insulation layer 151. The first insulation layer 151 is disposed at the notch position of the first groove 122, and at the same time a side of the electrode sheet body 130 away from the first groove 122 is covered with the first insulation layer 151 as well.

It should be noted here that the dimension of the first insulation layer 151 is set to the one that can completely cover the notch of the tab installation groove 121; and the dimension of the second insulation layer 152 is set to the one that can completely cover the notch of the first groove 122. In this embodiment, utilizing the second insulating layer 152 to cover the first groove 122 can avoid burr and dust problems generated by the punching process, thereby reducing the risk of short circuit of the battery and improving the quality of the battery cell.

FIG. 7 is a schematic diagram of another structure of a battery electrode sheet provided by an embodiment of the present application.

In the embodiment of the present application, after step S30, a gap 153 may be formed by punching the electrode sheet body 130 at the location where the first groove 122 is formed on the basis of the battery electrode sheet in the second state shown in FIG. 5. There is an active material layer on the surface of the current collector around the gap 153, where the electrode sheet has a larger thickness and is less prone to fracture.

After that, the notch position of the tab installation groove 121 where the tab 140 is installed may be covered by the first insulation layer 151 to form the battery electrode sheet 200 shown in FIG. 7. Alternatively, it is also possible to simultaneously cover both the notch position of the tab installation groove 121 and the side of the electrode sheet body 130 away from the tab installation groove 121 with the first insulation layer 151.

In embodiment of the present application, the insulation scheme for the location of the first groove 122 may be determined based on the size of the gap 153.

Exemplarily, in the case that the first groove 122 is completely punched out, there is no need to provide an insulation film at the location of the gap 153, as shown in FIG. 7.

Alternatively, a second insulation layer (not shown) is provided at the location of the gap 153 in the case that the first groove 122 is completely punched out.

Alternatively, the second insulation layer (not shown) is provided at the location of the gap 153 in the case that the first groove 122 is not completely punched out.

It should be noted that in the case of providing the second insulation layer, the dimension of the second insulation layer needs to be larger than the dimension of the gap 153, i.e., the second insulation layer covers the gap 153 completely.

Referring to FIG. 5, in the above-mentioned battery electrode sheet 100, the tab installation groove 121 has a dimension L1 along the first direction F (corresponding to the width direction K of the electrode sheet body), and the first groove 122 has a dimension L2 along the first direction F. The tab installation groove 121 and the first groove 122 both have a dimension D along the second direction S (corresponding to the length direction L of the electrode sheet body), the tab 140 has a dimension W along the second direction S, and the electrode sheet substrate 110 has a dimension Z along the second direction S.

The dimension of each structure should satisfy the following conditions:

$$L1 \geq L2;$$

$$L1 = (0.1 \text{ to } 0.6) \times Z;$$

L2 is from 0.1 mm to 15.0 mm;

$$D = (1.0 \text{ to } 4.0) \times W.$$

Hereinafter, two specific examples are given to illustrate the method of manufacturing the battery electrode sheet 100.

Example 1

Model 473590 electrode sheet substrate 110 was selected, where the electrode sheet substrate 110 had a dimension of 83 mm along the first direction F. In the preset area of the electrode sheet substrate 110, the groove 120 was formed by washing, with a dimension of 25 mm along the first direction F and a dimension of 10 mm along the second direction S.

After cutting the electrode sheet substrate 110 along the cutting lines 111, the groove 120 was slit into the tab installation groove 121 and the first groove 122, where the tab installation groove 121 had a dimension of 22 mm along the first direction F, the first groove 122 had a dimension of 3 mm along the first direction F, and the dimension of the tab installation groove 121 along the second direction S and the dimension of the first groove 122 along the second direction S were both 10 mm.

The tab 140 had a dimension of 6 mm along the second direction S, and the tab 140 was welded in the tab installation groove 121.

The first insulation layer 151 was provided at the notch of the tab installation groove 121 and at the position of the electrode sheet body 130 away from the tab installation groove 121; and the second insulation layer 152 was provided at the notch of the first groove 122 and at the position of the electrode sheet body 130 away from the first groove 122. Where, the first insulation layer 151 had a dimension of 26 mm along the first direction F and a dimension of 16 mm along the second direction S; and the second insulation layer 152 had a dimension of 6 mm along the first direction F and a dimension of 16 mm along the second direction S.

After the above battery electrode sheet was made, the positive battery electrode sheet, the separator layer, and the negative battery electrode sheet were wound together to form a rolled core.

Example 2

Model 473590 electrode sheet substrate 110 was selected, and the electrode sheet substrate 110 had a dimension of 83 mm along the first direction F. In the preset area of the electrode sheet substrate 110, the groove 120 was formed by washing, with a dimension of 25 mm along the first direction F and a dimension of 10 mm along the second direction S.

After cutting the electrode sheet substrate 110 along the cutting lines 111, the groove 120 was slit into the tab installation groove 121 and the first groove 122, where the tab installation groove 121 had the dimension of 22 mm along the first direction F, the first groove 122 had a dimension of 3 mm along the first direction F, and the dimension of the tab installation groove 121 along the second direction S and the dimension of the first groove 122 along the second direction S were both 10 mm.

The tab 140 had a dimension of 6 mm along the second direction S, and the tab 140 was welded in the tab installation groove 121.

The first insulation layer 151 was provided at the notch of the tab installation groove 121 and at the position of the electrode sheet body 130 away from the tab installation groove 121. Where, the first insulation layer 151 had a dimension of 26 mm along the first direction and a dimension of 16 mm along the length direction. By means of die punching, at the position of the electrode sheet body 130 where the first groove 122 was formed, a gap 153 was formed at the position of the first groove 122, where the gap 153 had a dimension of 5 mm along the first direction F and a dimension of 12 mm along the second direction S to ensure that the first groove 122 was completely punched out.

After the above battery electrode sheet was made, the positive battery electrode sheet, the separator layer, and the negative battery electrode sheet were wound together to form a rolled core.

The embodiment of the present application also provides a battery electrode sheet 100.

Referring to FIG. 6, the battery electrode sheet 100 includes the electrode sheet body 130 and the tab 140, and the electrode sheet body 130 is provided with the tab installation groove 121 and the first groove 122.

For example, the electrode sheet body 130 has a first edge 131 and a second edge 132 along its own width direction K, the tab installation groove 121 is communicated with the first edge 131 of the electrode sheet body 130, and the first groove 122 is communicated with the second edge 132 of the electrode sheet body 130. The tab 140 is connected in the tab installation groove 121.

In other words, the edge of the tab installation groove 121 is adjacent to the first edge 131 of the electrode sheet body 130, and the entire groove body of the tab installation groove 121 extends straightly to the first edge 131 of the electrode sheet body 130. In this way, there is no through slot, which is formed by punching, between the edge of the battery electrode sheet 100 and the edge of the tab installation groove 121. That is, the through slot structure provided at the end of the tab welding slot in the prior art is changed to the tab installation groove 121, where the thickness of the electrode sheet body 130 is increased, thereby reducing the possibility of fracture, and improving the safety and reliability of the battery electrode sheet 100.

In addition, it will be understood that although the battery electrode sheet 100 is provided with the first groove 122, the first groove 122 is the through slot as a whole and the structural layer at the edge of the notch of the first groove 122 includes the current collector and the active material layer covering the front and back surfaces of the current collector, having a larger thickness and a better strength, so the electrode sheet is not prone to fracture at this position.

In embodiment of the present application, along the direction from the second edge 132 to the first edge 131, i.e., the width direction K of the electrode sheet body 130, the projection of the first groove 122 on the first edge 131 covers at least part of the projection of the tab installation groove 121 on the first edge 131. This means that the position of the first groove 122 and the position of the tab installation slot 121 are at least partially overlapped in the length direction of the electrode sheet body 130. Of course, the present application is not limited to this, and the positions of the first groove 122 and the tab installation groove 121 may be completely flush in the length direction of the electrode sheet body 130.

In addition, referring to FIG. 6, as previously described, the first groove 122 is communicated with the second edge 132 of the electrode sheet body 130, whereby the first groove 122 has a notch located at the second edge 132; and the length D of the notch of the first groove 122 is greater than the width W of the tab 140 along the direction parallel to the first edge 131.

In addition, the tab installation groove 121 is communicated with the first edge 131 of the electrode sheet body 130, and has an opening located at the first edge 131. The length of the opening is equal to the length of the notch along the direction parallel to the first edge 131.

Alternatively, referring to FIG. 7, the tab installation groove 121 has an opening located at the first edge 131, and a length D2 of the opening of the tab installation groove 121 is less than a length D1 of the notch of the first groove 122 along the direction parallel to the first edge 131. This corresponds to the case that the first groove 122 is formed by punching.

In addition, it will be understood that the electrode sheet body 130 may include the current collector and the active material layer 133 formed on at least one surface of the current collector. For example, in the case that it is intended to form a positive battery electrode sheet, the electrode sheet body 130 includes a positive current collector and a positive active material layer formed on at least one surface of the positive current collector; in the case that it is intended to form a negative battery electrode sheet, the electrode sheet body 130 includes a negative current collector and a negative active material layer formed on at least one surface of the negative current collector. In the present application, the tab installation groove 121 and the first groove 122 may be formed by cleaning off the active material layer 133 from the surface of the current collector. The current collector may be a copper foil, an aluminum foil, a nickel foil, a copper mesh, an aluminum mesh, a carbon-coated copper foil, a carbon-coated aluminum foil, or, a polymer current collector with a conductive layer formed on a polymer surface or inside the polymer, etc.

It may be understood that in the case that the electrode sheet body 130 is formed with the tab installation groove 121 and the first groove 122 on the same surface, the region between the tab installation groove 121 and the first groove 122 should have the active material layer 133.

Furthermore, referring to FIG. 6, along the direction from the first edge 131 to the second edge 132, i.e., the width direction K of the electrode sheet body 130, the width L3 of the active material layer 133 between the tab installation groove 121 and the first groove 122 should be greater than the sum of the width L1 of the tab installation groove 121 and the width L2 of the first groove 122.

In this embodiment of the present application, as described above, the tab installation groove 121 has an opening located at the first edge 131, and in the case that the tab installation groove 121 is formed on the active material layer 133, the current collector is disposed at the bottom of the tab installation groove 121, and the three peripheral sides of the tab installation groove 121 are provided with the active material layer 133.

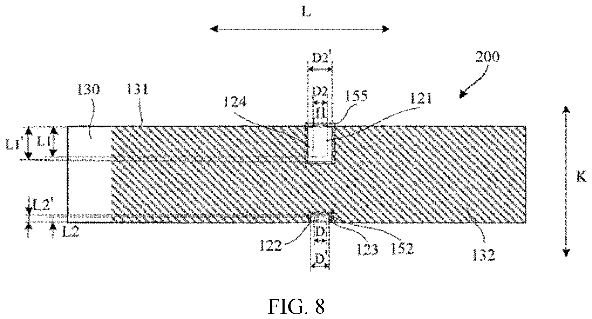

FIG. 8 is a schematic diagram of the backside structure of a battery electrode sheet shown in FIG. 6.

In one possible embodiment, both surfaces of the current collector may be each provided with the active material layer 133. Referring to the schematic diagram of FIG. 8 representing the backside of the battery electrode sheet 200, a second tab installation groove 124 is provided on the active material layer 133 that is located on the surface of the side of the current collector away from the tab installation groove 121 (the tab installation groove 121 is shown in dashed lines), and the second tab installation groove 124 is provided opposite to the tab installation groove 121. Along the length direction L of the electrode sheet body 130, a length D2' of the second tab installation groove 124 is greater than a length D2 of the tab installation groove 121; and along the width direction K of the electrode sheet body 130, a width L1' of the second tab installation groove 124 is greater than the width L1 of the tab installation groove 121.

Correspondingly to the setting of the tab installation groove 121, the current collector is provided at the bottom of the first groove 122 and the peripheral side of the first groove 122 is provided with the active material layer.

In addition, in one possible embodiment, when both surfaces of the current collector are provided with the active material layer 133, the second groove 123 is provided in the active material layer 133 of the surface of the current collector that is away from the first groove 122 (the first groove 122 is shown in dashed lines). The second groove 123 is provided opposite to the first groove 122. In the length direction L of the electrode sheet body 130, a length D' of the second groove 123 is greater than the length D of the first groove 122; and in the width direction K of the electrode sheet body 130, a width L2' of the second groove 123 is greater than the width L2 of the first groove 122.

In embodiments of the present application, as previously described, both surfaces of the current collector are each provided with the active material layer 133. The tab installation groove 121 is provided in the active material layer 133 on one of the sides of the current collector, the tab 140 is welded to the current collector, and the welding spot on the side of the current collector that is away from the tab 140 is covered by the active material layer 133. In this way, the purpose of insulating the welding spot for protection may be achieved.

Exemplarily, the first groove 122 is located in the active material layer 133 on the same side as the tab installation groove 121, and the other side of the current collector opposite to the first groove 122 is also provided with the active material layer 133. That is to say, the first groove 122 does not penetrate the electrode sheet body, and there is still the active material layer 133 on the side of the electrode sheet body 130 away from the first groove 122.

In this embodiment of the present application, referring to FIG. 6, in order to insulate the tab 140, the tab installation groove 121 housing the tab 140 is covered with the first insulation layer 151.

In addition, referring to FIG. 8, in the case that the second tab installation groove 124 is provided in the surface of the electrode sheet body 130 away from the tab installation groove 121, the second tab installation groove 124 is provided opposite to the tab installation groove 121. The second tab installation groove 124 is covered with a fifth insulation layer 155, and the portion of the first insulation layer 151 beyond the first edge 131 and the portion of the fifth insulation layer 155 beyond the first edge 131 are bonded to each other.

For the portion of the first groove 122, referring to FIG. 7, the first groove 122 may be communicated with the second edge 132. If the battery electrode sheet is made by the method of the electrode sheet described above, the first groove 122 is a structure that necessarily appears when the tab installation groove 121 is cut out.

Moreover, two ends of the electrode sheet body 130 along the length direction L of the electrode sheet body may form a winding head-end and a winding tail-end. That is, the two ends of the electrode sheet body 130 along the length direction L are the winding head-end and the winding tail-end for winding of the battery electrode sheet 100.

In one possible embodiment, the tab installation groove 121 and the first groove 122 are located at the same position in the length direction L of the electrode sheet body. In addition, the tab installation groove 121 and the first groove 122 have the same extension length in the length direction L of the electrode sheet body. This facilitates cutting out the electrode sheet body 130 from the electrode sheet substrate 110.

Exemplarily, the first groove 122 runs through the electrode sheet body 130 along the thickness direction of the battery electrode sheet 100, that is, the first groove is the through groove.

As another possible embodiment, the groove depth of the first groove 122 is less than the thickness of the electrode sheet body 130, and the notch of the first groove 122 is covered with the second insulation layer 152.

As previously described, the battery electrode sheet 100 includes the first groove 122 and the second groove 123 that are opposite to each other, and the tab installation groove 121 and the second tab installation groove 124 that are opposite to each other. This facilitates installation of the tab 140 in the tab installation groove 121 by ultrasonic welding. It may be understood that in the case that the tab is welded in the tab installation groove 121 by laser welding, the second slot 123 and the second tab installation groove 124 described above may also not be provided.

Exemplarily, the tab installation groove 121 has a dimension L1 along the width direction K of the electrode sheet body, the first groove 122 has a dimension L2 along the width direction K of the electrode sheet body, the tab installation groove 121 and the first groove 122 both have a dimension D along the length direction L of the electrode sheet body, the tab has a dimension W along the length direction L of the electrode sheet body, and the electrode sheet substrate has a dimension Z along the length direction L of the electrode sheet body; which satisfies the following conditions:

$$L1 \geq L2;$$

$$L1 = (0.1 \text{ to } 0.6) \times Z;$$

L2 is from 0.1 mm to 15.0 mm;

$$D = (1.0 \text{ to } 4.0) \times W.$$

It will be understood that the battery electrode sheet 100 of the embodiment of the present application may be obtained by the above method of making the battery electrode sheet, or may be processed by other methods. It is not limited in the present application.

Referring to FIG. 7, the tab 140 includes a first segment 141 disposed in the tab installation groove 121 and a second segment 142 protruding out of the tab installation groove 121, the second segment 142 is provided with an tab adhesive 143, and the first insulation layer 151 covers part of the tab adhesive 143.

Referring to FIG. 6, in one possible embodiment, the second insulation layer 152 goes beyond the second edge 132 by the distance of less than 3 mm.

The embodiment of the present application also provides a battery including an outer shell and the rolled core, the rolled core being encapsulated within the outer shell. Exemplarily, the outer shell may be an outer shell of aluminum-laminated film.

The rolled core is formed by laminating and winding the first electrode sheet, the separator, and the second electrode sheet. The first electrode sheet and the second electrode sheet have opposite polarity, where the first electrode sheet may be the battery electrode sheet as described above. Moreover, the structure and functional principle and the like of the battery electrode sheet have been described in detail above and will not be repeated herein.

Exemplarily, in the above described battery, the surface of the active material layer of the second electrode sheet directly opposite to the tab installation groove 121 is covered with a third insulation layer. In addition, the surface of the active material layer of the second electrode sheet directly opposite to the first groove is also covered with a fourth insulation layer. This can achieve insulation protection between the first electrode sheet and the second electrode sheet.

In the description of the present disclosure, it should be noted that, unless otherwise clearly specified and defined, the terms "installation", "connected with", and "connected to" should be understood in a broad sense, for example, it may be permanent connection or indirect connection through an intermediate medium, or it may be internal communication between two components, or interaction relationship between two components. For those skilled in the art, the specific meanings of the above terms in the present disclosure can be understood based on specific situations.

In the description of the present disclosure, it should be understood that orientations or positional relations indicated by terms "upper", "lower", "front", "back", "vertical", "horizontal", "top", "bottom", "inside", "outside", etc. are based on the orientations or positional relations shown in the drawings, and they are merely to facilitate the description of the present disclosure and simplify the description, not to indicate or imply that the indicated device or element must have a specific orientation and be constructed and operated in a specific orientation. Thus, they cannot be understood as limitations to the present disclosure.

The terms "first", "second", "third", "fourth", etc. (if present), in the description, claims and the above-mentioned drawings of the present application are used to distinguish similar objects, and do not need to describe a specific order or sequence. It should be appreciated that the data used in this way are interchangeable under appropriate circumstances so that the embodiments of the present application described herein, for example, can be implemented in an order other than those illustrated or described herein.

Furthermore, the terms "include" and "has", as well as any variations thereof, are intended to cover non-exclusive inclusion. For example, a process, method, system, product or device including a series of steps or units need not be limited to those steps or units clearly listed, but may include other steps or units that are not clearly listed or are inherent to those process, method, product or device.

Finally, it should be noted that: the above embodiments are only used to describe the technical solutions of the present disclosure, rather than limiting the same. Despite the present disclosure has been described in details with reference to the above-mentioned embodiments, those skilled in the art should understand that modifications can still be made to the technical solutions described in the above-mentioned embodiments, or equivalent substitutions can be made to some or all of the technical features therein; and these modifications or substitutions will not make the essential of corresponding technical solutions depart from the scope of the technical solutions in the embodiments of the present disclosure.

**Claims**

1. A battery electrode sheet, comprising an electrode sheet body and a tab, wherein the electrode sheet body is provided with an tab installation groove and a first groove, the tab installation groove is communicated with a first edge of the electrode sheet body, the first groove is communicated with a second edge of the electrode sheet body, the first edge and the second edge are two opposite edges of the electrode sheet body, and the tab is connected in the tab installation groove.

2. The battery electrode sheet according to claim 1, wherein along a direction from the second edge to the first edge, a projection of the first groove on the first edge covers at least portion of a projection of the tab installation groove on the first edge.

3. The battery electrode sheet according to claim 1, wherein the first groove has a notch located at the second edge, and in a direction parallel to the first edge, a length of the notch of the first groove is greater than a width of the tab; and/or
the tab installation groove has an opening disposed at the first edge, the first groove has a notch disposed at the second edge, and a length of the opening is less than or equal to a length of the notch along a direction parallel to the first edge.

4. The battery electrode sheet according to any one of claims 1-3, wherein the electrode sheet body comprises a current collector and an active material layer provided on at least one surface of the current collector, an area between the tab installation groove and the first groove having an active material layer.

5. The battery electrode sheet according to claim 4, wherein along a direction from the first edge to the second edge, a width of an active material layer between the tab installation groove and the first groove is greater than the sum of a width of the tab installation groove and a width of the first groove.

6. The battery electrode sheet according to claim 4, wherein the tab installation groove has an opening located at the first edge, the current collector is disposed at a bottom of the tab installation groove, and three peripheral sides of the tab installation groove are each provided with an active material layer.

7. The battery electrode sheet according to claim 6, wherein both surfaces of the current collector are each provided with the active material layer, and a second installation slot is provided in an active material layer on a side surface of the current collector away from the tab installation groove, and the second tab installation groove is provided opposite to the tab installation groove;

   along a length direction of the electrode sheet body, a length of the second tab installation groove is greater than a length of the tab installation groove, and/or, along a width direction of the electrode sheet body, a width of the second tab installation groove is greater than a width of the tab installation groove;
   wherein a width direction of the electrode sheet body is a direction from the first edge to the second edge and the electrode sheet body has a length direction perpendicular to the width direction.

8. The battery electrode sheet according to claim 4, wherein the first groove has a notch located at the second edge, the current collector is disposed at a bottom of the first groove, and a peripheral side of the first groove is provided with an active material layer.

9. The battery electrode sheet according to claim 8, wherein both surfaces of the current collector are each provided with an active material layer, and a second groove is provided in an active material layer on a surface of the current collector away from the first groove, and the second groove is provided opposite to the first groove;

along a length direction of the electrode sheet body, a length of the second groove is greater than a length of the first groove, and/or, along a width direction of the electrode sheet body, a width of the second groove is greater than a width of the first groove;
wherein a width direction of the electrode sheet body is a direction from the first edge to the second edge, and the battery electrode sheet has a length direction perpendicular to the width direction.

10. The battery electrode sheet according to claim 4, wherein both surfaces of the current collector are each provided with an active material layer, the tab installation groove is provided in the active material layer on one side of the current collector, the tab is welded to the current collector, and a welding spot on a side of the current collector away from the tab is covered by the active material layer.

11. The battery electrode sheet according to claim 10, wherein the first groove is located on the active material layer on the same side as the tab installation groove, and the other surface of the current collector opposite to the first groove is provided with an active material layer.

12. The battery electrode sheet according to any one of claims 1-3, wherein the tab installation groove accommodating the tab is covered with a first insulation layer; and/or, the first groove is covered with a second insulation layer.

13. The battery electrode sheet according to claim 12, wherein the tab comprises a first segment disposed in the tab installation groove and a second segment protruding out of the tab installation groove, the second segment being provided with a tab adhesive, the first insulation layer covering part of the tab adhesive.

14. The battery electrode sheet according to claim 12, wherein the second insulation layer extends beyond the second edge by a distance of less than 3 mm.

15. The battery electrode sheet according to claim 12, wherein a surface of the battery electrode sheet away from the tab installation groove is provided with a second tab installation groove, the second tab installation groove being provided opposite to the tab installation groove, the second tab installation groove being covered with a fifth insulation layer, and a portion of the first insulation layer extending beyond the first edge and a portion of the fifth insulation layer extending beyond the first edge being bonded to each other.

16. The battery electrode sheet according to any one of claims 1-3, wherein the first groove is a through-groove running through the electrode sheet along a thickness direction of the electrode sheet.

17. The battery electrode sheet according to any one of claims 1-3, wherein the tab installation groove has a dimension L1 along a width direction of the electrode sheet body, the first groove has a dimension L2 along the width direction of the electrode sheet body, the tab installation groove and the first groove both have a dimension D along a length direction of the electrode sheet body, the tab has a dimension W along the length direction of the electrode sheet body, and an electrode sheet substrate has a dimension Z along the length direction of the electrode sheet body;
which satisfies the following conditions:

$$L1 \geq L2;$$

$$L1 = (0.1 \text{ to } 0.6) \times Z;$$

L2 is from 0.1 mm to 15.0 mm;

$$D = (1.0 \text{ to } 4.0) \times W.$$

18. A battery, comprising a battery cell formed by laminating and winding a first electrode sheet, a separator and a second electrode sheet, the first electrode sheet and the second electrode sheet having opposite polarity, wherein the first electrode sheet is the battery electrode sheet according to any one of claims 1-17.

19. The battery according to claim 18, wherein a surface of an active material layer of the second electrode sheet directly opposite to the tab installation groove is covered with a third insulation layer.

20. The battery according to claim 18, wherein a surface of an active material layer of the second electrode sheet directly opposite to the first groove is covered with a fourth insulation layer.

21. A method for manufacturing a battery electrode sheet, comprising:

   providing a plurality of grooves on one surface of an electrode sheet substrate, the plurality of grooves arranged at intervals in a first direction of the electrode sheet substrate; cutting the electrode sheet substrate into a plurality of electrode sheet bodies along a plurality of cutting lines, each groove being slit into a tab installation groove and a first groove along the cutting line, wherein the tab installation groove and the first groove slit from a same groove are located in different electrode sheet bodies; welding a tab in the tab installation groove of the electrode sheet body to form the battery electrode sheet; wherein the plurality of cutting lines are arranged at intervals on the electrode sheet substrate along the first direction, the plurality of cutting lines are disposed in one-to-one correspondence with the grooves, and each of the cutting lines passes through the corresponding groove.

22. The method for manufacturing the battery electrode sheet according to claim 21, wherein after welding the tab in the tab installation groove of the electrode sheet body, the method further comprises: covering a notch position of the tab installation groove where the tab is installed with a first insulation layer, and covering a notch position of the first groove with a second insulation layer.

23. The method for manufacturing the battery electrode sheet according to claim 21, wherein after cutting out the electrode sheet body, the method further comprises: performing punching at a location of the electrode sheet body where the first groove is formed to form a gap.

FIG. 1a

FIG. 1b

A plurality of grooves are provided in one surface of an electrode sheet substrate, and arranged at intervals in a first direction of the electrode sheet substrate

S10

The electrode sheet substrate is cut into a plurality of electrode sheet bodies along a plurality of cutting lines, and each groove is slit into a tab installation groove and a first groove along the cutting line

S20

A tab is welded in the tab installation groove of the electrode sheet body to form a battery electrode sheet

S30

FIG. 2

FIG. 3

FIG. 4

FIG. 5

FIG. 6

FIG. 7

FIG. 8

<div align="center">**INTERNATIONAL SEARCH REPORT**</div>

| International application No. |
| --- |
| **PCT/CN2022/117924** |

**A.     CLASSIFICATION OF SUBJECT MATTER**

H01M 4/13(2010.01)i

According to International Patent Classification (IPC) or to both national classification and IPC

**B.     FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT; WPI; EPODOC; CNKI: 极片, 极耳, 引线, 槽, 裁, 切, 中间, 中部, 中线, electrode, ear, tab, groove, cut, middle

**C.     DOCUMENTS CONSIDERED TO BE RELEVANT**

| Category* | Citation of document, with indication, where appropriate, of the relevant passages | Relevant to claim No. |
| --- | --- | --- |
| PX | CN 113644230 A (ZHUHAI COSMX BATTERY CO., LTD.) 12 November 2021 (2021-11-12) <br> claims 1-23 | 1-23 |
| PX | CN 216288512 U (ZHUHAI COSMX BATTERY CO., LTD.) 12 April 2022 (2022-04-12) <br> description, paragraphs [0046]-[0096] | 1-23 |
| X | CN 112467080 A (HUIZHOU GANFENG LITHIUM BATTERY TECHNOLOGY CO., LTD.) 09 March 2021 (2021-03-09) <br> description, paragraphs 12-33, and figures 2-3 | 1-23 |
| X | CN 112382735 A (DONGGUAN GANFENG ELECTRONICS CO., LTD.) 19 February 2021 (2021-02-19) <br> description, paragraphs 15-28, and figure 2 | 1-23 |
| X | CN 105655629 A (CHINA AVIATION LITHIUM BATTERY (LUOYANG) CO., LTD.) 08 June 2016 (2016-06-08) <br> description, paragraphs 47-65, and figures 10-16 | 1-23 |
| A | CN 104600250 A (TIANJIN LISHEN BATTERY JOINT-STOCK CO., LTD.) 06 May 2015 (2015-05-06) <br> entire document | 1-23 |

☐ Further documents are listed in the continuation of Box C.          ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **03 November 2022** | **30 November 2022** |

| Name and mailing address of the ISA/CN | Authorized officer |
| --- | --- |
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/117924**

| Patent document cited in search report | | | Publication date (day/month/year) | Patent family member(s) | Publication date (day/month/year) |
|---|---|---|---|---|---|
| CN | 113644230 | A | 12 November 2021 | None | |
| CN | 216288512 | U | 12 April 2022 | None | |
| CN | 112467080 | A | 09 March 2021 | None | |
| CN | 112382735 | A | 19 February 2021 | None | |
| CN | 105655629 | A | 08 June 2016 | None | |
| CN | 104600250 | A | 06 May 2015 | None | |

Form PCT/ISA/210 (patent family annex) (January 2015)

**REFERENCES CITED IN THE DESCRIPTION**

**Patent documents cited in the description**

*   CN 202111053876